# DEMANDE DE BREVET EUROPEEN

(11) **EP 1 685 884 A1**
(43) Date de publication de la demande: **02.08.2006**
(21) Numéro de dépôt: 05447010.9
(22) Date de dépôt: 28.01.2005
(51) Int. Cl.: A63F 13/12

(54) **Jeu électronique interactif et éducatif**

(71) Demandeur: Lezaack, Marie-Pierre, 4000 Liège (BE); Vanherreweghe, Jean, 1050 Bruxelles (BE)
(72) Inventeur: Lezaack, Marie-Pierre, 4000 Liège (BE); Vanherreweghe, Jean, 1050 Bruxelles (BE)
(74) Mandataire: Colens, Alain M.G.M.

(57) **Abrégé**

L'invention propose un appareil de communication interactive entre individus, la communication étant basée sur des questions et réponses. L'appareil comprend:
- un microprocesseur, un clavier et un écran d'affichage
- une base de données de questions et une base de données de réponses, toutes deux accessibles par l'utilisateur . Les questions et réponses ont été préalablement extraites au hasard à partir de bases de données extérieures à l'appareil et de plus gros volume, de telle sorte que peu ou pas de couples question-réponse associées, ne correspondent dans l'appareil, ainsi qu'une base de données des réponses aux questions contenus dans l'appareil, cette dernière base de données étant inaccessible au joueur,
- un moyen de communication, ou d'échange, avec d'autres appareils identiques mais comportant d'autres bases de données de questions et réponses, moyen apte à transmettre puis substituer à la base de données des réponses du premier appareil, d'autres réponses provenant desdits autres appareils.

## Description

### DOMAINE TECHNIQUE

L'invention se rattache au domaine de la communication interactive dans un but ludique et éducatif, avec un nombre indéterminé d'intervenants, en particulier de joueurs.

### ART ANTERIEUR

Les jeux électroniques existants portables ou à utilisation domestique peuvent être groupés en essentiellement 5 catégories :
1) ceux existants dans les petits appareils comme, par exemple, les « Game Boy » et les téléphones portables. Il s'agit d'appareil que les joueurs peuvent emporter partout avec eux. Les jeux contenus dans ces appareils peuvent être utilisés par un ou, au maximum, deux joueurs à la fois. Lorsqu'ils sont utilisés par un seul joueur, ces appareils peuvent être utilisés partout. Lorsqu'ils sont utilisés par deux joueurs, ils ne peuvent plus être utilisés partout car les joueurs doivent être en présence l'un de l'autre et chacun doit connecter son appareil à celui de l'autre au moyen d'un câble, ce qui signifie que les joueurs doivent disposer de place, d'un certain confort et de temps pour jouer. Compte tenu de ces contraintes, on peut raisonnablement supposer que les joueurs qui jouent ensemble sont des joueurs qui se connaissent ;
2) ceux existants dans les appareils plus volumineux que ceux de la catégorie précédente comme, par exemple, les « PlayStation » ou les « Xbox ». Il s'agit d'appareils transportables mais destinés à rester dans un même endroit. Les jeux contenus dans ces appareils se jouent avec un, ou deux, ou un petit nombre de joueurs dont le maximum semble être quatre. Lorsque ces appareils sont utilisés à plusieurs, les joueurs doivent être en présence les uns des autres. Les jeux de cette catégorie demandent également que les joueurs disposent de place, d'un certain confort et de temps pour jouer. Compte tenu de ces contraintes, on peut raisonnablement supposer que les joueurs qui jouent ensemble se connaissent directement ou indirectement. Par se connaître indirectement, on entend que ce sont, par exemple, des amis d'amis ou de la famille apparentée à des amis, etc. Il est en effet peu probable qu'un joueur invite chez lui de parfaits inconnus pour jouer à un jeu sur sa console de jeu ;
3) ceux existants dans les appareils moins volumineux que ceux de la catégorie précédente mais plus performants que ceux de la première catégorie comme, par exemple, la console de jeux portable PSP de Sony Computers Entertainment Inc ou la console de jeux portable DS de Nintendo. Ces appareils présentent les mêmes contraintes que celles attribuées aux appareils des deux premières catégories ;
4) les jeux de société classique comme, par exemple, le jeu d'échec électronique. L'appareil, de taille variable, présente les mêmes contraintes que celles attribuées aux appareils des trois premières catégories ;
5) les jeux sur Internet. Ces jeux se jouent à l'aide d'un ordinateur relié à l'Internet ce qui implique qu'on ne peut pas y jouer partout. Le nombre de joueurs pouvant jouer ensemble à un même jeu peut être très élevé. Ces joueurs ne se rencontrent pas physiquement pendant le cours du jeu en raison du fait que chaque joueur joue à partir de son ordinateur, lequel est généralement situé dans son habitation. Les jeux de cette catégorie demandent que les joueurs disposent de place, de confort et de temps pour jouer. Les joueurs peuvent se connaître ou être de parfaits inconnus.

Les jeux de sociétés non électroniques comme, par exemple, le « Trivial Poursuit », « Monopoly », le jeu d'échec, le jeu de dame, les cartes. Ces jeux sont transportables et pourtant on ne peut pas les utiliser partout parce qu'ils nécessitent une infrastructure adéquate, comme, par exemple, une table dans un salon d'une habitation d'un joueur, des places assises dans les trains, etc. Ces jeux se jouent à un ou à deux ou à un petit nombre de joueurs. Outre le besoin de place, ces jeux requièrent aussi du confort et du temps pour pouvoir jouer. Et on peut raisonnablement supposer que, en raison de ces contraintes, les joueurs doivent se connaître directement ou indirectement.

Le jeu selon l'invention se distingue des jeux existants, en ce qu'il fonctionne, de préférence, sur la base des principes suivants pris dans leur ensemble, séparément ou en combinaison quelconque :
- chaque joueur est équipé d'un appareil aisément transportable et manipulable;
- chaque appareil est équipé principalement d'une liste de questions à résoudre et d'une liste de solutions qui ne correspondent pas, pour l'essentiel, aux questions ;
- chaque appareil est équipé de listes de questions et de solutions différentes d'un appareil à l'autre ;
- un index unique est attribué à chaque question et à chaque réponse correspondante de manière à en faciliter la recherche et la communication;
- la résolution des questions se fait en recherchant les solutions de plusieurs manières différentes dont l'une préférée consiste à échanger entre deux appareils les solutions qu'ils contiennent afin de pouvoir y trouver une ou plusieurs réponses aux questions à résoudre ;
- chaque connexion entre deux appareils donne lieu à l'échange des listes de solutions et/ou, optionnellement afin de respecter la vie privée, à l'échange des données permettant l'identification des joueurs;
- chaque échange, qui inclut, au moins, le transfert des données permettant l'identification des joueurs, peut être qualifié par chaque joueur au moyen de la sélection d'un qualificatif dans une liste de qualificatifs proposé par l'appareil.
   Dans la présente description, les termes « solution(s) » et « réponse(s) » sont synonymes. Il en est de même des termes "base de données" et "liste", ainsi que de "communication" et d'"échange".

### BUTS DE L'INVENTION

L'invention, qui se compose d'un appareil et d'un algorithme supporté par un moyen électronique, est un jeu interactif qui a pour but certains des ou tous les avantages suivants :
1 pouvoir être emporté partout ;
2 pouvoir être utilisé partout ;
3 pouvoir être utilisé, dans le cadre d'une partie, seul ou avec un nombre illimité de joueurs et de personnes susceptibles d'apporter une aide au jeu;
4 pouvoir rencontrer physiquement les joueurs avec qui on joue ainsi que les personnes susceptibles d'apporter leur aide au jeu ;
5 pouvoir jouer avec des joueurs connus et/ou inconnus ;
6 pouvoir faire varier le nombre des joueurs dans le cadre d'une même partie ;
7 pouvoir choisir et varier la durée de jeu ;
8 permettre de réduire la difficulté d'aborder des personnes que l'on ne connaît pas ;
9 permettre aux joueurs de réduire et/ou de vaincre leur timidité en leur donnant un motif pour aller vers les autres et leur donner ainsi confiance en eux ;
10 permettre de réduire l'isolement des personnes;
11 permettre de réduire l'individualisme ;
12 améliorer la culture ;
13 améliorer l'orthographe ;
14 améliorer la mémoire ;
15 réduire l'ennui ;
16 permettre l'amusement et la détente ;
17 augmenter l'intérêt pour les technologies nouvelles ; 18 familiariser, de façon ludique, les joueurs avec les nouvelles technologies de l'information ;
19 favoriser un comportement actif dans la recherche de réponses auprès de son entourage mais également auprès d'autres joueurs inconnus ;
20 favoriser la rencontre, la communication et l'échange entre les joueurs et toute personne susceptible d'aider à la résolution des questions et ainsi augmenter son cercle de connaissances ;
21 amener chaque joueur à diriger son appareil vers celui d'un autre joueur avec toute la symbolique de la main tendue pour échanger les solutions et/ou les données relatives à l'identification des joueurs qu'ils contiennent ;
22 permettre aux joueurs de chercher très rapidement la solution à une question dans leurs listes de solutions grâce à l'attribution d'un index unique à chaque question et réponse correspondante ;
23 permettre aux joueurs de demander oralement et très rapidement la solution à une question grâce à l'attribution d'un index unique à chaque question et réponse correspondante ;
24 permettre aux joueurs de communiquer oralement et très rapidement la solution à une question grâce à l'attribution d'un index unique à chaque question et réponse correspondante ;
25 permettre aux joueurs d'échanger très rapidement leurs listes de solutions ;
26 permettre aux joueurs d'échanger très rapidement leurs noms ou pseudos de jeu associés aux numéros de leurs appareils, et éventuellement toute autre information ;
27 permettre aux joueurs de qualifier l'échange effectué au moyen de qualificatifs prédéfinis ;
28 permettre aux joueurs d'encoder des données supplémentaires qu'ils choisissent eux-mêmes ;
29 rendre l'apprentissage amusant et intéressant en distillant un suspense dans l'échange, entre les joueurs, de listes de solutions dans lesquelles peuvent ou non se trouver les réponses aux questions qu'ils doivent résoudre;
30 encourager la résolution des questions, la communication et les échanges de listes de solutions et/ou des coordonnées des joueurs par un système approprié de points éventuellement associé au temps écoulé ;
31 récompenser les joueurs à la fois sur la base de leurs connaissances et/ou sur la base de leurs qualités relationnelles ;
32 établir des classements de joueurs ;
33 donner de l'estime de soi aux joueurs via le classement par qualificatif attribué lors des échanges ;
34 permettre au joueur d'avoir une vision plus objective de sa personnalité et améliorer ainsi son comportement social grâce aux qualificatifs que d'autres joueurs lui ont attribué et qui sont consultables sur le site WEB du jeu.

### RESUME DE L'INVENTION

De manière générale, l'invention propose un appareil de communication interactive entre individus, ladite communication étant basée sur des questions et réponses, consistant en
- un microprocesseur, un moyen d'entrée de données, p.e. un clavier ou un microphone, et un moyen de sortie de données p.e. un écran d'affichage ou un haut-parleur,
- un ou des supports de logiciel et de données comportant une base de données de questions indexées (p.e. numérotées) et une base de données de réponses indexées en concordance, toutes deux accessibles par l'utilisateur via le moyen de sortie de données, les questions et réponses ayant été préalablement extraites au hasard à partir de bases de données extérieures à l'appareil et de plus gros volume, de telle sorte que peu ou pas de couples question-réponse associées, ne correspondent dans l'appareil, ainsi qu'une base de données des réponses aux questions contenus dans l'appareil, cette dernière base de données étant inaccessible au joueur mais permettant au logiciel de vérifier si une réponse introduite par le joueur correspond de manière correcte à la question correspondante,
- un moyen de communication, ou d'échange, avec d'autres appareils identiques mais comportant d'autres bases de données de questions et réponses, moyen apte à transmettre puis ajouter ou substituer à la base de données des réponses du premier appareil, d'autres réponses accessibles provenant desdits autres appareils.

Cet appareil est utilisé à titre de jeu interactif et éducatif.

Les autres caractéristiques de l'invention se retrouvent dans les revendications dépendantes annexées et dans la description détaillée qui suit.

### DESCRIPTION

Principe du jeu

Ce jeu invite chaque joueur à répondre à une liste de questions contenues sur support électronique dans un appareil à acquérir, en recherchant les réponses à ces questions de trois manières différentes.

Premièrement, par lui-même, en faisant appel à ses connaissances personnelles ou aux connaissances personnelles d'autres personnes comme, par exemple, ses amis ou en effectuant des recherches comme, par exemple, sur Internet.

Deuxièmement, en recherchant les réponses dans une liste de solutions également contenue sur support électronique dans son appareil, liste qui peut être renouvelée au moyen d'échanges avec les appareils d'autres joueurs.

Troisièmement, en recherchant les réponses via la consultation des listes de solutions contenues dans les appareils d'autres joueurs en établissant un contact verbal avec ceux-ci.

La résolution d'une question est atteinte lorsque la réponse exacte est introduite, correctement orthographiée, dans l'appareil par le joueur au moyen du clavier de son appareil. Elle donne lieu à l'attribution de points par l'appareil. Il s'agit de points de connaissance.

Optionnellement, le joueur peut demander à l'appareil de rechercher les réponses aux questions. Dans ce mode de recherche, l'appareil recherche les bonnes réponses, par lui-même, dans la liste des solutions du joueur. Si l'appareil trouve une ou plusieurs bonnes réponses dans cette liste de solutions, l'appareil affiche automatiquement chaque question et, en regard, sa réponse correcte. Ce mode de résolution peut donner lieu à l'attribution de points « chance » par l'appareil. Si l'appareil ne trouve aucune réponse correcte dans la liste de solutions du joueur, l'appareil signale au joueur l'échec de sa recherche et le joueur peut procéder à un échange de listes de solutions avec l'appareil d'un autre joueur de façon à ce que son appareil puisse effectuer une nouvelle recherche sur une nouvelle liste de réponses.

Toujours dans ce mode optionnel, après la résolution d'une question par l'appareil, c'est-à-dire après l'affichage de la question et de sa réponse, l'appareil peut donner la possibilité au joueur d'encoder, au moyen du clavier de l'appareil, la réponse qu'il a pu au préalable lire. Si le joueur choisit d'encoder la réponse et qu'il le fait correctement, l'appareil peut donner au joueur des points de connaissance.

Optionnellement, le jeu permet le choix du mode de recherche de la solution.

Lorsque le joueur encode une réponse à une question, il le fait dans un écran vierge de toute réponse. Le but poursuivi est d'exercer la mémoire du joueur.

Optionnellement, l'appareil peut imposer au joueur de répéter plusieurs fois l'encodage de la réponse afin de renforcer l'apprentissage. Dans ce cas, dès que la réponse a été correctement encodée par le joueur, l'appareil efface la réponse et lui demande de la réécrire. Ce processus est répété le nombre de fois imposé par l'appareil.

Les échanges, entre appareils, des listes de solutions et/ou, optionnellement, des données permettant l'identification des joueurs donnent également lieu à l'attribution de points par l'appareil. Il s'agit de points relationnels.

Le nombre de participants au jeu n'est pas limitatif. Il compte au moins un joueur. Chaque joueur doit posséder un appareil. Les échanges nécessitent au moins deux appareils.

Optionnellement, les échanges se font entre plus de deux appareils à la fois moyennant l'utilisation d'une station d'échange à laquelle les joueurs connectent leurs appareils. Pour des raisons pratiques, le nombre des appareils pouvant se connecter simultanément à une station d'échange est limité à dix.

### Propriétés de l'appareil

Dans un mode préféré de l'invention, l'appareil est constitué d'un boîtier rigide comportant essentiellement :
1- un écran ;
2- un clavier alphanumérique ;
3- un moyen de communication avec un appareil semblable et optionnellement avec une station d'échange ;
4- un support électronique contenant un logiciel servant au fonctionnement du jeu;
5- un support électronique contenant une liste de questions à résoudre ;
6- un support électronique contenant une liste de solutions ne correspondant pas, du moins pour l'essentiel, aux questions à résoudre ;
7- un support électronique contenant la liste des solutions aux questions à résoudre. Il s'agit d'une liste à laquelle le joueur n'a pas accès mais qui permet à l'appareil de contrôler le déroulement du jeu ;
8- un support électronique contenant le nom ou le pseudo du joueur associé au numéro de son appareil ;
9- un support électronique contenant une liste de qualificatifs permettant à chaque joueur de qualifier la qualité d'une rencontre effectuée ;
10- un support électronique contenant un répertoire dans lequel chaque joueur a la possibilité d'encoder diverses données qu'il choisit lui-même ;
11- un support électronique contenant les règles du jeu ;
12- un support électronique destiné à contenir les réponses aux questions résolues ;
13- un support électronique destiné à contenir les identifications de joueurs échangées ;
14- un support électronique destiné à contenir les qualificatifs donnés aux échanges ;
15- un support électronique destiné à contenir l'historique des différentes actions de jeu ;
16- un support électronique destiné à contenir les points;
17- un support électronique contenant une horloge;
18- un microprocesseur associé de manière fonctionnelle à l'ensemble des éléments précédents.

L'appareil est aisément transportable et manipulable et de préférence du format d'un téléphone mobile ou d'une calculatrice de poche. Il peut également y être intégré.

### Particularités des listes

La liste des questions à résoudre contenue dans chaque appareil est constituée de n questions sélectionnées au hasard parmi un nombre N très élevé de questions. La liste des solutions contenue dans chaque appareil est constituée de m solutions sélectionnées au hasard parmi un nombre N très important de solutions associées aux N questions. m peut être égal à ou différent de n. De préférence, m est égal à n.

La sélection au hasard des questions et des solutions a pour conséquence qu'il n'y a pas, pour l'essentiel, de correspondance entre la liste de questions et la liste de solutions contenues dans un appareil et qu'il n'y a pas deux appareils qui soient équipés de listes identiques.

La grande diversité dans les listes de questions et dans les listes de solutions contenues dans les appareils rend utiles les contacts verbaux entre joueurs ainsi que l'échange de listes de solutions entre appareils.

Dans un mode préféré de l'invention, afin de permettre au joueur de résoudre plus facilement les questions qui lui sont posées par son appareil et afin de lui permettre d'échanger plus rapidement une solution à l'occasion d'un contact verbal avec un autre joueur, la solution technique suivante est retenue.

A chaque question est attribué un numéro d'ordre particulier allant de 1 à N auquel est associé un groupe de lettres renseignant le domaine auquel appartient la question. A chaque solution correspondante est attribué le même numéro d'ordre associé au même groupe de lettres.

A titre d'exemple, la question : « Quel est le symbole chimique du potassium ? » et sa réponse « K » pourraient être identifiés par les caractères CHI-324 où le numéro 324 est un numéro d'ordre particulier et où les lettres CHI sont les trois premières lettres du mot chimie, domaine auquel la question et la réponse appartiennent. Encore à titre d'exemple, la question : « Quel est le rapport entre la circonférence et le diamètre d'un cercle ? » et sa réponse « Pi » pourraient être identifiées par les caractères MAT-436 où le numéro 436 est un numéro d'ordre particulier et où les lettres MAT sont les trois premières lettres du mot mathématiques, domaine auquel appartiennent cette question et cette réponse.

Les avantages de ce système sont illustrés par l'exemple suivant. Prenons un joueur qui circule en métro, à l'heure de pointe. Pour ce joueur, il sera plus facile de demander, entre deux stations de métro, à un autre joueur, s'il possède dans son jeu la réponse MAT-436 que de lui demander s'il connaît le rapport entre la circonférence et le diamètre d'un cercle. L'autre joueur n'aura en effet qu'à consulter sa liste de réponse numérotée.

Le fait de posséder ou non la réponse portant ce numéro ne limite en rien la communication entre les joueurs car la demande éveille chez le joueur sollicité la curiosité et l'envie de savoir ce qu'est la question MAT-436. En outre, s'il ne possède pas dans son jeu la réponse MAT-436, ce peut être le point de départ d'une réflexion personnelle ou avec d'autres personnes pour la recherche de la solution.

Optionnellement, l'identification des questions et des réponses correspondantes peut être limitée aux seuls numéros d'ordre sans que ceux-ci ne soient donc associés à des groupes de lettres renseignant les domaines auxquels les questions et les réponses correspondantes appartiennent.

Optionnellement, aucune identification des questions et réponses correspondantes n'est donnée.

Les listes de questions à résoudre et les listes de réponses peuvent être choisies respectivement dans une banque de questions et dans une base de réponses généralistes ou spécialisées comme par exemple en sciences, en histoire, en cinéma, en mathématiques, en littérature ou en musique. Le choix d'une catégorie plutôt qu'une autre est laissé à l'appréciation de chaque joueur qui choisit en fonction de ses goûts et de ses aptitudes.

Optionnellement, chaque liste de questions peut contenir des séries de questions générales et des séries de questions spécialisées dans l'un ou l'autre domaine et il appartient au joueur d'effectuer le choix d'une série de questions avant de commencer à jouer.

De préférence, à une liste de questions dite « spécialisée » comme, par exemple, en mathématiques est également associée une liste de réponses dite « spécialisée » appartenant au même domaine que la liste de questions. Dans l'exemple donné, la liste de réponses sera spécialisée en mathématiques.

Optionnellement, à une liste de questions dite « spécialisée » peut être associée une liste de réponses dite « généraliste ».

Il convient de préciser que le jeu reste possible entre joueurs ayant dans leurs appareils des listes de solutions appartenant à des catégories différentes. A titre d'exemple, la conséquence d'un contact entre un appareil équipé d'une liste de réponses dite « généraliste » et un appareil équipé d'une liste de réponses dite « spécialisée » aboutira seulement à rendre la liste de solutions de l'un moins « généraliste » et de l'autre moins « spécialisée ».

### Types de questions

Les questions posées aux joueurs doivent, de préférence, être énoncées en très peu de mots, de chiffres ou de symboles et doivent aboutir à des solutions toutes aussi brèves et dépourvues d'ambiguïté qui restent valables dans le temps.

Voici quelques exemples de problèmes et de solutions répondant à ces impératifs :
Quel est le symbole chimique du potassium ? K ; qui a dit : « Ich bin ein Berliner » ? John Kennedy; quelle est la capitale du Japon? Tokyo ; Louis Armstrong jouait de la ? Trompette ; qui a joué le rôle de Scarlett O Hara ? Vivien Leigh ; poisson japonais à la fois comestible et toxique ? Fugu ; quel est le rapport entre la circonférence et le diamètre d'un cercle? Pi ; « pourboire » en anglais ? « Gratuity ».

Les questions ainsi que leurs solutions doivent, de préférence, tenir compte des zones culturelles et linguistiques et être établies en fonction de l'âge des joueurs comme, par exemple, pour les enfants parlant français, âgés de 10 à 12 ans, de 13 à 17 ans, etc et vivant en Europe de l'Ouest (Belgique, France, Suisse, Monaco,.)

Autres caractéristiques de l'appareil et des listes de questions/réponses :
Afin de permettre à un joueur de savoir qu'un tiers est également un joueur, les joueurs et/ou leurs appareils peuvent porter des marques de reconnaissances adéquates.

De même, afin de permettre aux joueurs d'identifier plus facilement le type de listes de questions/solutions dont sont équipés les joueurs qu'ils rencontrent, les joueurs et/ou leurs appareils peuvent également porter des marques de reconnaissances adéquates.

Par marques de reconnaissance, on entend de préférence des caractéristiques de formes, de couleurs, des logos ainsi que des objets comme par exemple des pins.

### Mode de transmission des données entre appareils

L'échange des données se fait, de préférence, électroniquement entre les appareils, par ordre décroissant de préférence, suivant les méthodes suivantes:
- directement et avec un contact physique en utilisant, par exemple, un système de fiches approprié ;
- directement mais sans contact physique en utilisant, par exemple, les ondes ;
- indirectement et sans contact physique en utilisant une station d'échange à laquelle les deux appareils sont connectés au moyen, par exemple, d'un système de fiches approprié ;
- indirectement et sans contact physique entre les deux appareils par la ligne téléphonique ;
- indirectement et sans contact physique entre les appareils par le réseau Internet.

Les méthodes 1 et 2 impliquent que deux joueurs prennent chacun leur appareil en main et le dirige l'un vers l'autre avec toute la symbolique de la main tendue.
Les méthodes 1, 2 et 3 impliquent que les joueurs soient en présence les uns des autres, ce qui est aussi un des buts du jeu.

Optionnellement, l'échange électronique simultané entre plus de deux appareils se fait indirectement et sans contact entre les appareils en utilisant une station d'échange à laquelle les appareils sont connectés au moyen, par exemples d'un système de fiches approprié.

Optionnellement, l'échange des données se fait par un échange physique des supports électroniques contenant les données à échanger entre deux appareils à la fois.

### Types de données échangées entre appareils

Les données échangées entre appareils sont les listes de solutions et/ou, optionnellement, les données permettant l'identification des joueurs que sont, par exemple, les noms ou pseudos de jeu des joueurs associés aux numéros de leurs appareils.. Les données d'identification peuvent éventuellement être plus complètes et inclure, par exemple, un profil du joueur. Dans la présente description, les termes « données d'identification » et « coordonnées » sont synonymes.

Les données échangées peuvent donc être :
soit les listes de solutions ;
soit les listes de solutions et les données d'identification des joueurs ;
soit les données d'identification des joueurs.

Lorsque l'échange ne concerne que les listes de solutions, il peut être qualifié, par exemple, de « échange de type 1 » ; lorsque l'échange concerne les listes de solutions et les données d'identification des joueurs, il peut être qualifié, par exemple, de « échange de type 2 » ; lorsque l'échange ne concerne que les données d'identification des joueurs, il peut être qualifié, par exemple, de « échange de type 3 », ou de « échange du 3° type » par analogie au titre du film « Rencontre du 3° type » de Spielberg où le thème du film est précisément la rencontre, la communication et l'échange.

Les échanges ne sont possibles qu'entre les types suivants :

| Appareil du joueur A | Appareil du joueur B | Données échangées |
|---|---|---|
| Type 1 | Type 1 | L'appareil du joueur A reçoit la liste de solutions de l'appareil du joueur B tandis que l'appareil du joueur B reçoit la liste de solutions de l'appareil du joueur A. |
| Type 2 | Type 2 | L'appareil du joueur A reçoit la liste de solutions de l'appareil du joueur B ainsi que les coordonnées du joueur B tandis que l'appareil du joueur B reçoit la liste de solutions de l'appareil du joueur A et les coordonnées du joueur A. |
| Type 3 | Type 3 | L'appareil du joueur A reçoit les coordonnées du joueur B tandis que l'appareil du joueur B reçoit les coordonnées du joueur A. |
| Type 1 | Type 2 | L'appareil du joueur A reçoit la liste de solutions de l'appareil du joueur B ainsi que les coordonnées du joueur B tandis que l'appareil du joueur B reçoit la liste de solutions de l'appareil du joueur A. |
| Type 2 | Type 1 | L'appareil du joueur A reçoit la liste de solutions de l'appareil du joueur B tandis que l'appareil du joueur B reçoit la liste de solutions de l'appareil du joueur A et les coordonnées du joueur A. |

A titre d'exemple, un joueur qui n'a pas eu le temps d'examiner la liste de réponses de son appareil peut avoir avantage à limiter l'échange électronique à la seule identification des joueurs. Dans ce cas, il sélectionnera, au niveau de son appareil, un échange de type 3. L'échange avec l'appareil d'un autre joueur ne sera possible que si l'autre joueur a également sélectionné un échange de type 3.

Encore, à titre d'exemple, aucun échange ne sera possible entre les appareils de deux joueurs si l'un a sélectionné un échange de type 1 et si l'autre a sélectionné un échange de type 3.

L'identification de chaque type d'échange constitue la solution technique retenue pour permettre aisément la sélection d'un type mais aussi la communication orale du type sélectionné. Un joueur aura plus facile à demander à un autre joueur s'il veut bien faire un « échange de type 2 » plutôt que s'il veut bien faire un « échange de leurs solutions étendu à leurs coordonnées ».

Après un échange électronique entre deux appareils, incluant l'identification des joueurs, chaque joueur à la possibilité de qualifier, la qualité de la rencontre qu'il a faite au moyen d'un qualificatif choisi dans une liste de qualificatifs prédéfinie dans son appareil. Chaque qualificatif attribué est associé au nom ou pseudo de jeu du joueur rencontré ainsi qu'au numéro de l'appareil de ce dernier.

A titre d'exemple, un échange sera possible entre les appareils de deux joueurs si l'un a sélectionné un échange de type 1 et si l'autre a sélectionné un échange de type 2. Le fait qu'un joueur choisisse de ne pas transmettre ses coordonnées alors que l'autre accepte de le faire ne fait pas obstacle à l'échange des listes de solutions et à la transmission des coordonnées de l'un des deux joueurs. Le joueur qui aura reçu les coordonnées de l'autre aura la possibilité de qualifier la rencontre. Tandis que l'autre ne l'aura pas.

Lors de chaque échange, chaque appareil peut enregistrer les paramètres que sont, par exemple, la date et l'heure de l'échange.

Caractéristiques des échanges électroniques des solutions entre appareils

Entre deux appareils, l'échange électronique des listes de réponses s'effectue, de préférence, par ordre décroissant de préférence, suivant les méthodes suivantes :
Les listes de réponses sont échangées en partie entre les deux appareils. La partie que chaque appareil échange est constituée de réponses prélevées au hasard dans sa liste de réponses. Chaque appareil perd donc une partie de sa liste de réponses et gagne une partie de celle de l'autre. Les listes de réponses sont échangées dans leur entièreté entre les deux appareils. Chaque appareil perd donc sa liste de réponses et gagne celle de l'autre.
La liste de réponses de chacun des deux appareils est incorporée dans la liste de réponses de l'autre appareil, de sorte que chacun des deux appareils possèdent alors une base constituée de deux listes de réponses. Cette base combinée, qui n'est pas consultable par les joueurs, est directement réduite, de façon aléatoire, dans chacun des deux appareils à la taille de la liste de réponses initialement contenue dans chacun de ces deux appareils.

Les méthodes 1 et 3, présentent l'avantage de ne pas rendre inutile un échange électronique ultérieur avec le même appareil même si sa liste de réponses n'a pas été renouvelée par un échange avec un joueur tiers aux deux premiers.

La méthode 3 présente le désavantage d'une perte de variété des réponses due à l'élimination d'une partie des réponses.

Optionnellement, l'échange électronique des listes de réponses entre plus de deux appareils à la fois s'effectue à l'aide d'une station d'échange, de préférence, par ordre décroissant de préférence, suivant les méthodes suivantes

Chaque appareil prélève au hasard dans sa liste de réponses une partie de réponses qu'il décharge dans la station. Celle-ci répartit les réponses au hasard dans les listes de réponses des autres appareils.
Chaque appareil décharge sa liste de réponses en totalité dans la base de réponse de la station. Celle-ci répartit les réponses au hasard dans les listes de réponses des autres appareils
Chaque appareil décharge sa liste de réponses en totalité dans la base de réponses de la station. Celle-ci répartit les réponses au hasard dans les listes de réponses de tous les appareils.

### Attribution des points

L'écriture correcte par le joueur d'une bonne solution donne droit à des points de connaissance. La réalisation d'échanges entre appareils donne droit à des points relationnels.

L'encodage correct d'une bonne solution peut donner droit à un nombre différent de points de connaissance selon qu'elle existe ou non dans la liste de solutions de l'appareil. Afin de favoriser les échanges de solutions et donc les rencontres entre joueurs, l'appareil peut donner, par exemple, davantage de points lorsque la solution se trouve dans l'appareil, grâce à l'apport de données provenant d'autres joueurs, que lorsqu'elle ne s'y trouve pas.

De même, l'échange électronique des listes de solutions et/ou, optionnellement, des données permettant l'identification des joueurs, peut donner droit à un nombre différent de points relationnels. Afin de favoriser les échanges de solutions, l'appareil peut donner, par exemple, davantage de points lorsque l'échange inclut le transfert des listes de réponses que lorsqu'il est limité au seul transfert des données d'identification des joueurs.

Optionnellement, l'appareil peut donner plus de points à un joueur qui transmet sa liste de solutions et ses coordonnées qu'au joueur qui ne transmet que ses coordonnées.

La prise en compte du facteur temps pour la résolution des questions est effectuée dans les modes suivants.

Dans un mode, l'appareil peut prévoir un système d'attribution de points de connaissance et de points relationnels décroissant avec le temps qui s'écoule pour l'ensemble des questions.

Dans un autre mode, l'appareil peut prévoir ce même système pour chaque question. Dans ce cas, pour la 1e question, le point de départ pour le calcul du temps peut être la consultation de la liste de questions par le joueur. Pour chaque autre question, le point de départ pour le calcul du temps peut être le moment de la résolution de la précédente question.

Dans un autre mode, l'appareil peut prévoir un délai maximal pour la résolution de l'ensemble de la liste de questions et des pénalités peuvent être appliquées lorsque ce délai est dépassé. Le délai maximal et les pénalités peuvent être, par exemple, fonction du nombre de questions de la liste, du niveau de difficulté de ces questions, du degré de spécialisation de ces questions et de l'importance estimée de la diffusion des réponses à ces questions dans la population de joueurs.

Par exemple, pour une liste de 25 questions de culture générale, laquelle se caractérise par son petit nombre de questions à résoudre et une large diffusion supposée des réponses à ce genre de questions dans la population de joueurs, le délai optimal pour résoudre cette liste peut être fixé à un mois et peut entrer en vigueur à compter du moment où le joueur a effectué une première action de jeu sur la liste comme, par exemple, prendre connaissance des questions à résoudre. Passé ce délai d'un mois, l'appareil peut réduire le score des points de connaissance et des points relationnels d'un nombre fixe ou variable de points par semaine supplémentaire qui s'écoule jusqu'au moment où la liste de questions est entièrement résolue.

Optionnellement, le facteur temps peut être pris en compte par l'appareil en utilisant au moins l'un des modes décrit ci-avant.

Par ailleurs, l'appareil peut imposer au joueur de réaliser, pendant la résolution de sa liste de questions, un nombre minimum d'échanges des listes de solutions et/ou, optionnellement des données permettant l'identification des joueurs. Si la condition n'a pas été remplie, l'appareil réduit le score de points de connaissance d'un nombre de points proportionnels au nombre d'échanges non effectués pour atteindre le minimum fixé par l'appareil.

L'appareil peut également imposer au joueur de résoudre un nombre minimum de questions de sa liste de questions. Si la condition n'a pas été remplie, l'appareil réduit le score de points relationnels d'un nombre de points proportionnels au nombre de questions non résolues pour atteindre le minimum fixé par l'appareil.

Optionnellement, l'appareil peut imposer de réaliser un nombre minimum et/ou maximum d'échanges préalablement à la résolution d'une question.

Optionnellement, l'appareil peut déterminer lui-même quand une question doit être résolue et quand des échanges doivent être effectués.

### Consultation des résultats

A tout moment du jeu, le joueur peut consulter sa situation : les questions résolues, les scores obtenus, les questions restant à résoudre, les solutions présentes dans sa liste de solutions, les qualificatifs d'échange qu'il a attribués.

Les scores et qualificatifs d'échanges enregistrés par l'appareil peuvent ou doivent être déchargés par les joueurs sur le site WEB du jeu ou être envoyés aux responsables du jeu par SMS ou par la ligne téléphonique ou par la remise du support électronique contenant les résultats du joueur.

Pour chaque catégorie de listes de questions, des classements sont ainsi établis sur le site WEB en fonction des différents types de points gagnés ainsi que en fonction des qualificatifs attribués.

A titre d'exemple, pour les listes de questions pour enfants francophones âgés de 13 à 17 ans et vivant en Europe de l'Ouest, il y aura, par exemple, un classement pour les points de connaissance, un classement pour les points relationnels, un classement pour les joueurs les plus mystérieux, un classement pour les joueurs les plus sympathiques, etc.

Des classements combinés sont également établis. A titre d'exemple, citons un classement pour les points de connaissance et pour les points relationnels.

Des récompenses peuvent être attribuées aux meilleurs joueurs. Il peut s'agir de nouvelles listes de questions, de T-shirts, de pins, etc.

### Renouvellement des listes de questions/réponses

Lorsqu'un joueur a résolu toutes les questions de sa liste et/ou qu'il souhaite jouer avec une nouvelle liste de questions/réponses, il peut soit recharger son appareil par téléchargement, soit remplacer le ou les supports électroniques contenant les listes de questions/réponses par un ou des nouveaux supports électroniques contenant de nouvelles listes de questions/réponses, soit remplacer son appareil par un nouvel appareil équipé de listes de questions/réponses.

### Autres modalités de jeu

Que les questions et réponses correspondantes soient ou non identifiées par un groupe de lettres et/ou de chiffres, l'appareil peut assister le joueur au moment de l'encodage d'une réponse en lui signalant si la réponse encodée est ou non correcte.

Après x essais d'encodage infructueux de la solution à une question donnée, l'appareil débloque le jeu des joueurs en donnant lui-même la bonne réponse à la question. Dans ce cas, le joueur ne gagne pas de points de connaissance. x peut varier en fonction de la difficulté de la question, de la spécialisation de la question et de la diffusion estimée des listes de réponses susceptibles de contenir la réponse recherchée.

En outre, pour l'assister dans le déroulement du jeu, le joueur peut recevoir de l'appareil diverses informations sous forme de messages écrits ou sous forme de messages vocaux.

L'appareil peut également commenter le score, la chance ou la malchance du joueur en utilisant des appréciations, par exemple, ironiques, sarcastiques, laudatives et encourager le joueur à persévérer.

Dans le mode optionnel de recherche par l'appareil des réponses aux questions, après un nombre y de recherches infructueuses, l'appareil peut imposer au joueur de résoudre une question en encodant une réponse. Après un nombre x d'essais d'encodage infructueux pour une même question, l'appareil affiche la bonne réponse et le joueur est obligé de passer à une autre question. L'appareil est capable d'afficher la bonne réponse car l'appareil est équipé de la liste des bonnes réponses aux questions à résoudre à laquelle il est seul à avoir accès.

x et y peuvent varier en fonction de la difficulté de la question, de la spécialisation de la question et de la diffusion estimée de listes de réponses susceptibles de contenir la réponse recherchée. x peut être égal à ou différent de y.

Chaque joueur a, en toute circonstance, la possibilité d'encoder dans son répertoire, au moyen du clavier, des données choisies par lui comme, par exemple, un nom, un numéro de téléphone, une adresse, un lieu de rendez-vous, etc.

Comme déjà mentionné, l'appareil pour jouer peut être un appareil dédié exclusivement au jeu, ou comporter d'autres fonctions.

Il peut aussi être d'abord un appareil de téléphonie auquel on aura adapté, ou simplement ajouté, le jeu.

Dans un mode de réalisation de l'invention, les connexions se font par téléphones portables via le réseau, par exemple GSM.

L'opérateur de téléphonie peut dès lors s'inscrire à l'organisation du jeu, ou en être le promoteur. Avantageusement, l'opérateur peut offrir des bonus, par exemple sous forme de temps de connexion gratuit, aux joueurs ayant atteint un certain niveau.

Selon un mode de réalisation actuellement moins préféré on comprendra que la base de données des réponses peut augmenter au fur et à mesure des connexions (communications, echanges) du joueur. Une proportion faible de ces réponses correspondront à ses propres questions, les autres réponses pourront servir à être communiquées à des tiers joueurs.

### En résumé l'invention propose

Selon un premier aspect , un appareil de communication électronique comprenant :
A) un boîtier rigide comportant un écran et un clavier alphanumérique ;
B) une liste de n questions sur support électronique sélectionnées au hasard dans une banque de N questions, où N est beaucoup plus grand que n ;
C) une liste de m réponses sur support électronique sélectionnées au hasard dans une banque de N réponses associée à la banque de N questions ;
D) un moyen pour échanger la liste de m réponses d'un appareil avec celle d'un autre appareil ;
E) un moyen pour échanger le nom ou pseudo de jeu d'un joueur associé au numéro de son appareil avec le nom ou pseudo de jeu d'un autre joueur associé au numéro de l'appareil de ce dernier.
F) un moyen pour qualifier, après avoir effectué un échange, la qualité d'une rencontre avec un joueur;
G) un moyen pour contrôler quand une question est résolue ;
H) un moyen pour comptabiliser le nombre de questions résolues et les archiver;
I) un moyen pour comptabiliser le nombre d'échanges entre appareils ;
J) un moyen pour enregistrer les qualificatifs attribués ;
K) un moyen pour connecter l'appareil avec un site web ;
L) optionnellement, un moyen pour échanger la liste de m réponses d'un appareil avec la liste de réponses contenue dans une station d'échange.
   Selon un autre aspect l'appareil présente un format similaire à celui d'un téléphone portable ou d'un ordinateur de poche.
   Selon encore un autre aspect, le nombre d'éléments n dans la liste de questions et m dans la liste de réponses est de 25 à 250.
   La liste de questions et la liste de réponses peuvent être choisies respectivement dans une banque de questions et une base de réponses spécialisées comme par exemple en sciences, en histoire, en cinéma, en mathématiques, en littérature ou en musique.
   L'échange des listes de réponses est effectuée de préférence à l'aide d'une clé électronique.
   L'échange des listes de réponses est effectué par échange de supports électroniques.
   L'invention propose aussi un procédé de fabrication pour l'appareil comprenant les étapes suivantes :
M) fournir un boîtier comprenant un écran et un clavier alphanumérique ;
N) y insérer le support électronique comportant la liste de n questions ;
O) y insérer le support électronique comportant la liste de m réponses ;
P) fournir un moyen électronique pour échanger, entre deux appareils, les listes de réponses qu'ils contiennent, et, optionnellement, fournir un moyen électronique pour échanger, entre plus de deux appareils les listes de réponses qu'ils contiennent au moyen d'une station d'échange ;
Q) fournir un moyen électronique pour échanger, entre deux appareils, les noms ou pseudos de jeu des joueurs associés aux numéros de leurs appareils, et, optionnellement, fournir un moyen électronique pour échanger, entre plus de deux appareils les noms ou pseudos de jeu des joueurs associés aux numéros de leurs appareils, au moyen d'une station d'échange ;
R) fournir un logiciel capable de :
   a) permettre le défilement à l'écran de toutes les questions et toutes les réponses contenues respectivement dans la liste de questions et dans la liste de réponses de l'appareil ;
   b) permettre au joueur de sélectionner dans sa liste de questions la question qu'il veut résoudre ;
   c) permettre d'encoder une réponse au moyen du clavier ;
   d) déterminer quand une question est résolue;
   e) comptabiliser le score associé à une question résolue ;
   f) déterminer le nombre d'essais d'encodage infructueux ;
   g) faire afficher par l'appareil, après x essais infructueux d'encodage, la bonne réponse correctement orthographiée ;
   h) permettre au joueur de passer, après la résolution d'une question ou après x essais infructueux d'encodage de la réponse, à une autre question à résoudre qu'il peut également sélectionner ;
   i) comptabiliser le nombre de questions résolues ;
   j) offrir au joueur la possibilité de faire un échange incluant sa liste de réponses et/ou incluant les données permettant son identification que sont, par exemple, le nom ou pseudo de jeu du joueur associé au numéro de son appareil ;
   k) déterminer le type d'échange effectué ;
   l) comptabiliser le nombre d'échanges effectués en fonction de chaque type ;
   m) comptabiliser le score associé à un échange en fonction de chaque type ;
   n) évaluer si le délai optimal imparti à un joueur est écoulé ;
   o) déterminer si les nombres minima d'échanges à faire et de questions à résoudre ont été atteints dans le délai imparti ;
   p) déterminer les pénalités ;
   q) réduire les scores obtenus par le joueur en fonction de ces pénalités ;
   r) associer un qualificatif au nom ou pseudo de jeu d'un joueur ainsi qu'au numéro de son appareil ;
   s) décharger les scores comptabilisés et les qualificatifs enregistrés dans le site WEB du jeu.
S) Fournir un moyen électronique pour permettre au joueur de décharger ses résultats par SMS ou par la ligne téléphonique fixe.
T) Fournir un moyen électronique pour connecter l'appareil avec un site web.
U) Optionnellement, fournir un moyen pour permettre l'enlèvement du support électronique contenant les scores et qualificatifs, afin qu'il puisse être remis à l'organisateur du jeu.
   Utilisation de l'appareil de l'une des revendications 1 à 5
V) Pour échanger avec un autre appareil similaire les listes de réponses et/ou les coordonnées des joueurs en procédant comme suit :
   a) sélectionner le type d'échange que l'on veut opérer : soit la liste de solutions seule, soit la liste de solutions associées aux coordonnées du joueur, soit les seules coordonnées du joueur ;
   b) prendre son appareil en main et le diriger vers l'appareil de l'autre joueur ;
   c) établir un contact physique par un système de fiches approprié ou établir une liaison sans contact physique en utilisant les ondes en fonction du mode de transmission de données choisi ;
   d) procéder à l'échange ;
   e) dès que l'appareil signale que l'échange est effectué, interrompre le contact sélectionné.
W) Pour qualifier, après un échange avec un autre appareil similaire, la qualité de la rencontre en procédant comme suit :
   a) après l'opération e) du point A, faire défiler la liste des qualificatifs et sélectionner le qualificatif le plus approprié à la rencontre ;
   b) associer automatiquement ce qualificatif au nom ou pseudo de jeu du joueur ainsi qu'au numéro de son appareil.
X) Pour enregistrer, à tout moment, au moyen du clavier de l'appareil, des données que le joueur choisit librement.
Y) Pour décharger les scores et qualificatifs en connectant l'appareil sur le site WEB du jeu en utilisant l'Internet ou la téléphonie mobile ou la téléphonie fixe.
Z) Enlever de l'appareil les supports électroniques contenant les résultats du joueur et pouvoir les remettre à l'organisateur du jeu.

Selon un autre aspect de l'invention le score total comporte au moins un des éléments suivants :
AA) Des points de connaissance pour lesquels :
   a) le score est égal à x points lorsque la bonne réponse est correctement encodée et que cette réponse existe dans la liste de réponses de l'appareil ;
   b) le score est égal à y points lorsque la bonne réponse est correctement encodée et qu'elle ne se trouve pas dans la liste de réponses de l'appareil.
BB) Des points relationnels pour lesquels :
   a) le score est égal à r points lorsque un échange incluant les listes de solutions a été effectué ;
   b) le score est égal à s points lorsque un échange limité aux coordonnées des joueurs a été effectué.
CC) Des points de connaissance et/ou des points relationnels pouvant être diminués de façon appropriée :
   a) si la condition de délai maximal imposée par l'appareil pour la résolution des questions de la liste n'est pas respectée et/ou
   b) si les conditions de minima d'échanges à faire et de questions à résoudre pendant le délai maximal ne sont pas respectées.

## Revendications

1. Appareil de communication interactive entre individus, ladite communication étant basée sur des questions et réponses, consistant en
- un microprocesseur, un moyen d'entrée de données, p.e. un clavier ou un microphone, et un moyen de sortie de données p.e. un écran d'affichage ou un haut-parleur,
- un ou des supports de logiciel et de données comportant une base de données de questions indexées (p.e. numérotées) et une base de données de réponses indexées, toutes deux accessibles par l'utilisateur via le moyen de sortie de données, les questions et réponses ayant été préalablement extraites, éventuellement au hasard, à partir de bases de données extérieures à l'appareil et de plus gros volume, de telle sorte que peu ou pas de couples question-réponse associées, ne correspondent dans l'appareil, ainsi qu'une base de données des réponses aux questions contenues dans l'appareil, cette dernière base de données étant inaccessible au joueur mais permettant au logiciel de vérifier si une réponse introduite par le joueur correspond de manière correcte à la question correspondante,
- un moyen de communication, ou d'échange, avec d'autres appareils identiques mais comportant d'autres bases de données de questions et réponses, moyen apte à transmettre puis ajouter ou substituer à la base de données des réponses du premier appareil, d'autres réponses accessibles provenant desdits autres appareils.

2. Appareil selon la revendication 1 dans lequel le moyen de communication comprend un contact physique avec au moins un autre appareil, directement ou via un cable ou une clé électronique et/ou le moyen de communication pour fonctionner exige la présence physique des appareils endéans une distance prédéterminée l'un de l'autre, par exemple une connection infra-rouge ou de type Bluetooth.

3. Appareil de communication selon la revendication précédente **caractérisé en ce que** le logiciel comporte un moyen de cotation de l'appareil en fonction du nombre de solutions trouvées, et éventuellement de la manière dont elles ont été trouvées et/ou du nombre d'interactions nécessaires, à l'aide dudit moyen de communication, pour trouver la réponse.

4. Appareil de communication selon la revendication 1 dans lequel le logiciel prévoit un moyen de cotation d'une solution selon que la solution a été trouvée par un joueur seul, ou via un joueur successif après échange de réponses.

5. Appareil selon n'importe laquelle des revendications précédentes dans lequel il est prévu deux types de cotations, l'une des cotations étant basée sur l'adéquation des réponses encodées aux questions soit une cotation des connaissances, et l'autre sur le nombre et le type d'interaction soit une cotation relationnelle.

6. Appareil de communication selon la revendication 1 dans lequel chaque appareil est indexé et/ou associé au nom du joueur.

7. Appareil de communication selon la revendication précédente **caractérisé en ce qu'**il comporte un moyen de cotation d'un appareil tiers ou du nom (ou pseudo) d'un utilisateur, cotation établie par un tiers après interaction, en fonctions de critères subjectifs ou objectifs tels la qualité humaine de l'interaction ,p.e. le niveau de sympathie, ou le nombre de bonnes réponses reçues, les dites cotations pouvant être transmises à un système de base, éventuellement via le réseau internet, et être accessibles à des tiers.

8. Appareil de communication selon n'importe laquelle des revendications précédentes dans lequel une récompense est fournie au joueur en fonction des points ou cotations obtenus après un certain temps.

9. Appareil de jeu selon la revendication précédente dans lequel la récompense est un temps de communication pour téléphone portable offert par un opérateur de télécommunication ou dans lequel la récompense est l'obtention d'un jeu supplémentaire de réponses et/ou de questions.

10. Procédé de mise en relation sociale et ludique d'individus **caractérisé en ce qu'**il est prévu un moyen de reconnaissance, éventuellement visible, entre individus en possession d'un appareil selon n'importe laquelle des revendications 1 à 9.
